# FASCICULE DE BREVET EUROPEEN

(11) **EP 0 666 772 B1**
(45) Date de publication et mention de la délivrance du brevet: **04.06.1997**
(21) Numéro de dépôt: 94917706.7
(22) Date de dépôt: 02.06.1994
(51) Int. Cl.: B01D 53/04

(54) **DISPOSITIF DE SEPARATION PAR ADSORPTION D'ELEMENTS D'UN MELANGE GAZEUX**
ADSORPTIONSVORRICHTUNG ZUR TRENNUNG DER ELEMENTE EINES GASGEMISCHES
DEVICE FOR ADSORPTION SEPARATION OF ELEMENTS IN A GASEOUS MIXTURE

(30) Priorité: 03.06.1993 JP 156363/93
(43) Date de publication de la demande: 16.08.1995
(73) Titulaire: L'AIR LIQUIDE, SOCIETE ANONYME POUR L'ETUDE ET L'EXPLOITATION DES PROCEDES GEORGES CLAUDE, F-75321 Paris Cédex 07 (FR)
(72) Inventeur: TOMITA, Shinji, Harima Factory of Teisan K.K., Kako-gun, Hyogo-gen (JP); MURUYAMA, Shuichi, Harima Factory of Teisan K.K., Kako-gun, Hyogo-gen (JP); WAGNER, Marc, F-94100 Saint-Maur (FR)
(74) Mandataire: Mercey, Fiona Susan
(86) Numéro de dépôt international: FR9400645
(87) Numéro de publication internationale: WO9429000

(56) Documents cités:
- EP-A- 0 486 926
- DE-C- 832 600
- FR-A- 2 175 569

## Description

La présente invention concerne les dispositifs de séparation d'éléments d'un mélange gazeux, du type comprenant au moins deux adsorbeurs superposés définissant chacun un volume interne ayant une zone d'extrémité inférieure et une zone d'extrémité supérieure et des moyens de mise en communication sélective des zones d'extrémité supérieure et inférieure des adsorbeurs avec des circuits de fluides, les moyens de mise en communication comportant, pour chaque adsorbeur, un tube intérieur vertical dont une extrémité communique avec une desdites zones d'extrémité du volume interne, et dont l'autre extrémité est reliée à l'un desdits circuits de fluides.

Les dispositifs de séparation de ce genre sont utilisés essentiellement dans des technologies de variation de pression ou de température dites PSA ou TSA, pour la production, à partir d'un mélange gazeux, d'un constituant gazeux de ce mélange, notamment d'un constituant de l'air, oxygène ou azote, ou pour la purification d'un mélange gazeux, notamment d'air d'alimentation d'une unité de séparation cryogénique de l'air, également pour la production d'un constituant de l'air, oxygène et'ou azote et/ou argon et mettent généralement en oeuvre au moins un des adsorbants choisis dans le groupe comprenant les zéolithes, le charbon actif, l'alumine ou les gels de silice. Des exemples de ces technologies sont décrits notamment dans les documents US-5.223.004, EP-0.092.153, US-3.338.030 ou US-5.137.548. Dans les dispositifs connus, comprenant généralement de deux à quatre adsorbeurs, ces derniers sont disposés verticalement les uns à côté des autres, en batterie, avec de nombreuses tuyauteries pourvues de vannages reliant les parties inférieure et supérieure des différents adsorbeurs aux circuits de fluides. De plus, dans les applications mettant en oeuvre l'alternance des gaz chauds et froids, les adsorbeurs, qui ne sont dans la pratique pas isolés thermiquement, doivent être disposés à une certaine distance horizontale les uns des autres.

Un dispositif du type défini in limine est décrit dans le document DE-C-832 600.

Le document FR-A-2 175 569 décrit par ailleurs un dispositif de séparation à adsorbeurs superposés.

La présente invention a pour objet de proposer un dispositif de séparation par adsorption présentant une configuration particuliè-ement compacte, ramassée et rigide, et convenant à diverses applications.

Pour ce faire, selon une caractéristique de l'invention les tubes verticaux sont centraux et sont reliés mécaniquement l'un à l'autre.

Selon une caractéristique plus particulière de l'invention, les tubes centraux sont reliés mécaniquement aux parois d'extrémité verticalement opposées du dispositif.

La présente invention concerne également les applications de tels dispositifs pour la production par séparation d'un constituant d'un mélange gazeux, notamment d'oxygène ou d'azote à partir de l'air, d'hydrogène à partir d'un mélange de gaz contenant de l'hydrogène, ou, pour l'épuration en oxydes de carbone et en eau d'air fourni à une unité de séparation cryogénique de l'air.

D'autres caractéristiques et avantages de la présente invention ressortiront de la description suivante de modes de réalisation donnés à titre illustratif mais nullement limitatif, faite en relation avec les dessins annexés, sur lesquels :
- la figure 1 est une vue schématique en coupe verticale d'un dispositif à lits superposés selon une architecture non conforme à l'invention, et
- les figures 2 et 3 sont des vues schématiques en coupe verticale de deux modes de réalisation de l'invention;

Dans la description qui va suivre et sur les dessins, les éléments identiques ou analogues portent les mêmes chiffres de référence éventuellement indicés.

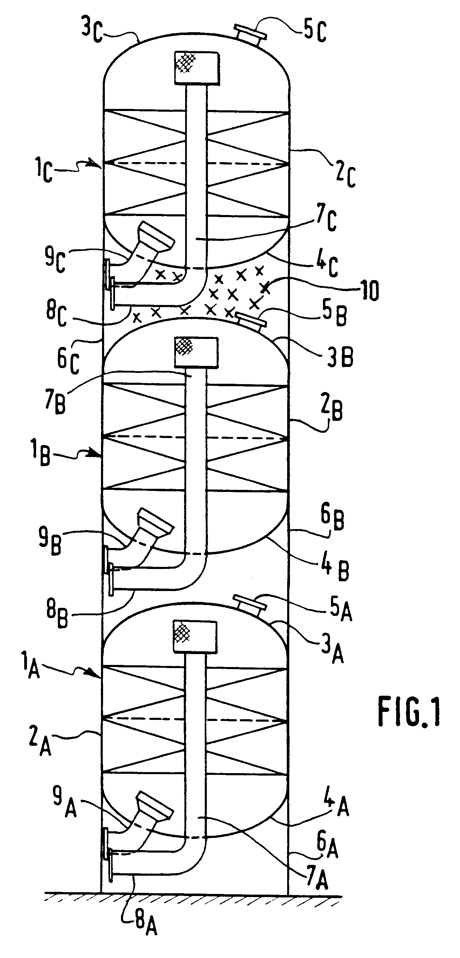

Dans le mode de réalisation de la figure 1, qui ne participe pas de l'invention revendiquée, le dispositif comporte trois adsorbeurs superposés 1A, 1B, 1C, identiques et constitués chacun d'une paroi cylindrique périphérique 2ᵢ et de parois transversales d'extrémité en forme de coupoles supérieure 3ᵢ et inférieure 4ᵢ. La coupole supérieure 3i comporte typiquement une ouverture 5ᵢ de remplissage de l'adsorbeur pour y constituer au moins un lit d'adsorbant. Les adsorbeurs sont reliés les uns aux autres par des jupes cylindriques 6C et 6B ménageant un espacement entre les adsorbeurs adjacents, l'ensemble étant supporté sur une jupe inférieure 6A solidaire de l'adsorbeur inférieur 1A. Dans le mode de réalisation représenté, chaque adsorbeur comporte un tube central coaxial vertical 7ᵢ débouchant dans la zone supérieure du volume interne de chaque adsorbeur et traversant le fond inférieur 4ᵢ de l'adsorbeur pour se prolonger en un tronçon de conduit horizontal 8ᵢ s'étendant dans l'espace au-dessous de chaque adsorbeur pour la connection à un circuit de fluide. Chaque adsorbeur comporte également un tube 9ᵢ traversant la paroi inférieure et débouchant dans la zone inférieure de chaque adsorbeur, également pour connection à un circuit de fluide.

Comme on le voit bien sur la figure 1, la disposition superposée des adsorbeurs et l'aménagement concentrique des tubes 7ᵢ permet de réduire considérablement l'emprise au sol du dispositif et facilite grandement son installation sur des sites de production ou d'utilisation. De plus, dans cette disposition verticale, ce sont les petites surfaces (extrémités arrondies) des adsorbeurs qui sont voisines, ce qui permet de réduire les interférences thermiques entre deux adsorbeurs adjacents. Ces interférences peuvent en outre être aisément quasiment supprimées en disposant dans les jupes de liaison 6B et 6C au moins un matériau thermiquement isolant comme représenté en 10 sur la figure.

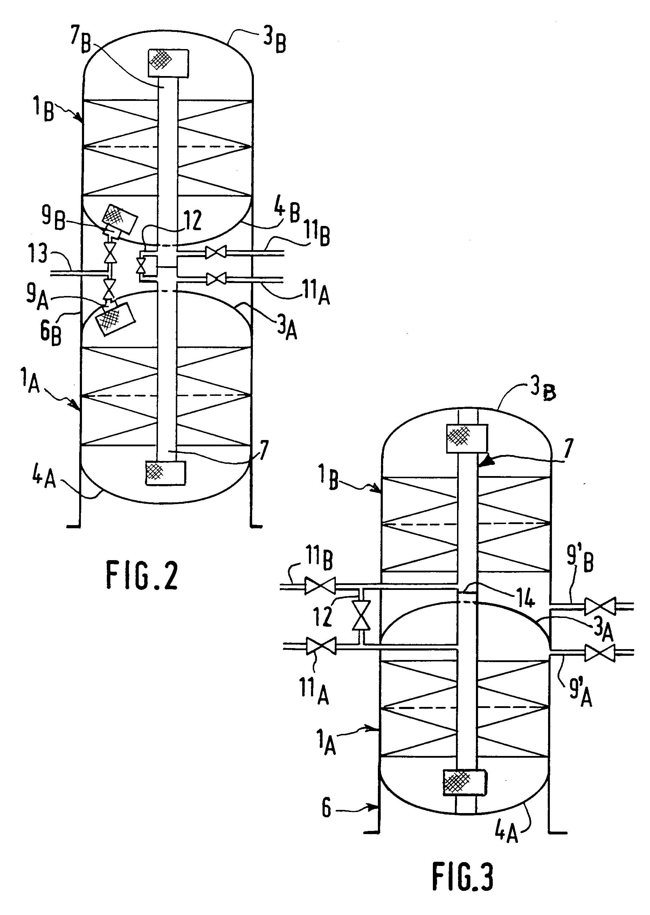

Une plus grande compacité et une réduction encore plus efficace des interférences thermiques, même sans isolation, entre deux adsorbeurs est obtenue avec le mode de réalisation représenté sur la figure 2. Dans ce mode de réalisation à deux adsorbeurs 1A et 1B, les deux tubes centraux 7A et 7B sont couplés mécaniquement l'un à l'autre dans l'espace défini dans la jupe 6B entre les fonds bombés en regard 3A et 4B et débouchent respectivement dans la zone inférieure de l'adsorbeur inférieur 1A et dans la zone supérieure de l'adsorbeur supérieur 1B. Chaque tube 7ᵢ communique, via une vanne, avec une tubulure 11ᵢ de raccordement aux circuits de fluides et l'un avec l'autre par une tubulure de bipasse 12 munie d'une vanne. De façon symétrique, la tubulure 9B, qui communique avec la zone inférieure de l'adsorbeur supérieur, et la tubulure 9A, qui traverse ici la paroi supérieure 3A de l'adsorbeur inférieur 1A pour communiquer avec la zone supérieure de ce dernier, communiquent, via des vannes, avec une tubulure commune 13 de raccordement au circuit de fluide.

Le mode de réalisation de la figure 3, exploitant la disposition symétrique des lits d'adsorbeur rendant inutile l'aménagement d'une isolation thermique entre les deux adsorbeurs, utilise un tube central unique 7 dont les extrémités sont reliées aux parois d'extrémité opposées 3B et 4A des lits supérieur 1B et inférieur 1A, le lit supérieur 1B étant dépourvu de paroi inférieure (4B), la séparation avec le lit inférieur 1A étant assurée par la paroi supérieure bombée 3A du lit inférieur 1A. Dans ce mode de réalisation, les parois. périphériques 2ᵢ et les jupes 6ᵢ sont remplacées par une virole unique 6. Le tube 7, dont les extrémités opposées communiquent toujours avec les zones d'extrémités opposées des adsorbeurs 1A et 1B, est obturé centralement par une paroi 14, la conduite de bipasse 12 étant ici avantageusement prévue directement entre les tubulures 11A et 11B. Dans ce mode de réalisation, les autres tubes 9'A et 9'B communiquent respectivement avec les parties supérieure et inférieure des adsorbeurs inférieur 1A et supérieur 1B au travers de la virole 6. Le mode de réalisation de la figure 3 présente une grande compacité et une rigidité accrue, le tube traversant 7 permettant de reprendre les efforts de pression sur les parois opposées 4A, 3B des adsorbeurs et convenant ainsi pour les applications mettant en oeuvre des pressions élevées.

## Revendications

1. Dispositif de séparation d'éléments d'un mélange gazeux, comprenant au moins deux adsorbeurs superposés (1ᵢ) définissant chacun un volume interne ayant une zone d'extrémité inférieure et une zone d'extrémité supérieure, et des moyens (7, 9, 11, 13) de mise en communication sélective des zones d'extrémité avec des circuits de fluides, les moyens de mise en communication comportant, pour chaque adsorbeur (1ᵢ) un tube intérieur vertical (7) dont une extrémité communique avec une desdites zones d'extrémité du volume interne et dont l'autre extrémité est reliée à l'un desdits circuits de fluide, caractérisé en ce que les tubes verticaux (7) des adsorbeurs sont centraux et sont reliés mécaniquement l'un à l'autre.

2. Dispositif selon la revendication 1, caractérisé en ce que les tubes centraux (7) des adsorbeurs (1ᵢ) sont reliés mécaniquement aux parois d'extrémité verticalement opposées (3B, 4A) du dispositif.

3. Dispositif selon l'une des revendications précédentes, caractérisé en ce que les adsorbeurs (1ᵢ) sont disposés dans une même enveloppe cylindrique (6).

4. Dispositif selon l'une des revendications précédentes, caractérisé en ce que les moyens de mise en communication comportent des vannes dont au moins une partie est disposée dans l'espace intermédiaire entre deux adsorbeurs (1A, 1B) superposés adjacents.

5. Dispositif selon l'une des revendications précédentes, caractérisé en ce que les tubes centraux (7) de deux adsorbeurs adjacents (1A, 1B) communiquent avec les zones d'extrémité opposées desdits adsorbeurs.

6. Dispositif selon l'une des revendications précédentes, caractérisé en ce qu'il comprend au moins trois adsorbeurs superposés (1A, 1B, 1C).

7. Application d'un dispositif selon l'une des revendications précédentes à la production par séparation d'un constituant gazeux d'un mélange gazeux.

8. Application d'un dispositif selon l'une des revendications 1 à 6, à l'épuration d'air fourni à une unité de séparation cryogénique de l'air.

## Claims

1. Device for the separation of elements of a gas mixture, comprising at least two superposed adsorbers (1ᵢ) each defining an internal volume having a lower end zone and an upper end zone, and means (7, 9, 11, 13) for bringing the end zones into selective communication with fluid circuits, the means for bringing into communication including, for each adsorber (1ᵢ), a vertical internal tube (7) one end of which communicates with one of the said end zones of the internal volume and the other end of which is connected to one of the said fluid circuits, characterized in that the vertical tubes (7) of the adsorbers are central and are mechanically connected to each other.

2. Device according to Claim 1, characterized in that the central tubes (7) of the adsorbers (1ᵢ) are mechanically connected to the vertically opposed end walls (3B, 4A) of the device.

3. Device according to one of the preceding claims, characterized in that the adsorbers (1ᵢ) are arranged in one and the same cylindrical casing (6).

4. Device according to one of the preceding claims, characterized in that the means for bringing into communication include valves, at least part of which is arranged in the intermediate space between two adjacent superposed adsorbers (1A, 1B).

5. Device according to one of the preceding claims, characterized in that the central tubes (7) of two adjacent adsorbers (1A, 1B) communicate with the opposite end zones of the said adsorbers.

6. Device according to one of the preceding claims, characterized in that it comprises at least three superposed adsorbers (1A, 1B, 1C).

7. Application of a device according to one of the preceding claims to the production, by separation, of a gaseous constituent of a gas mixture.

8. Application of a device according to one of Claims 1 to 6, to the purification of air delivered to a cryogenic air separation unit.

## Patentansprüche

1. Vorrichtung zur Zerlegung eines Gasgemisches in seine Bestandteile, umfassend mindestens zwei übereinander angeordnete Adsorber (1ᵢ), die jeweils ein inneres Volumen mit einem unteren Endbereich und einem oberen Endbereich definieren, und Muttel (7, 9, 11, 13) zur wahlweisen Verbindung der Endbereiche mit Fluidkreisläufen, wobei die Verbindungsmittel für jeden Adsorber (1ᵢ) ein vertikales, inneres Rohr (7), dessen eine Ende mit einem der Endbereiche des inneren Volumens in Verbindung steht und dessen andere Ende mit einem der Fluidkreisläufe verbunden ist, umfassen, dadurch gekennzeichnet, daß die vertikalen Rohre (7) der Adsorber zentral liegen und mechanisch miteinander verbunden sind.

2. Vorrichtung nach Anspruch 1, dadurch gekennzeichnet, daß die zentralen Rohre (7) der Adsorber (1ᵢ) mechanisch mit den vertikal einander gegenüberliegenden Stirnwänden (3B, 4A) der Vorrichtung verbunden sind.

3. Vorrichtung nach einem der vorangehenden Ansprüche, dadurch gekennzeichnet, daS die Adsorber (1ᵢ) in demselben zylindrischen Gehäuse (6) angeordnet sind.

4. Vorrichtung nach einem der vorangehenden Ansprüche, dadurch gekennzeichnet, daß die Verbindungsmittel Ventile umfassen, von denen mindestens ein Teil in dem Zwischenraum zwischen zwei aneinander angrenzenden, übereinander angeordneten Adsorbern (1A, 1B) angeordnet ist.

5. Vorrichtung nach einem der vorangehenden Ansprüche, dadurch gekennzeichnet, daß die zentralen Rohre (7) der beiden aneinander angrenzenden Adsorber (1A, 1B) mit den einander gegenüberliegenden Endbereichen der Adsorber in Verbindung stehen.

6. Vorrichtung nach einem der vorangehenden Ansprüche, dadurch gekennzeichnet, daß sie mindestens drei übereinander angeordnete Adsorber (1A, 1B, 1C) umfaßt.

7. Anwendung einer Vorrichtung nach einem der vorangehenden Ansprüche zur Gewinnung eines Gasbestandteils aus einem Gasgemisch durch dessen Zerlegung.

8. Anwendung einer Vorrichtung nach einem der Ansprüche 1 bis 6 zur Reinigung von Luft, die einer Einheit zur Tieftemperaturzerlegung der Luft zugeführt wird.
